# EUROPÄISCHE PATENTANMELDUNG

(11) **EP 2 939 958 A1**
(43) Veröffentlichungstag der Anmeldung: **04.11.2015**
(21) Anmeldenummer: 15000527.0
(22) Anmeldetag: 24.02.2015
(51) Int. Cl.: B65G 47/14

(54) **Verfahren zum Vereinzeln von Rollkörpern sowie Rollkörpervereinzelungsvorrichtung zur Durchführung des Verfahrens**

(30) Priorität: 29.04.2014 CH 6412014
(71) Anmelder: Ferag AG, 8340 Hinwil (CH)
(72) Erfinder: Brunschwiler, Othmar, 9553 Bettwiesen (CH)
(74) Vertreter: Rentsch Partner AG

(57) **Zusammenfassung**

Verfahren zum Vereinzeln von Rollkörpern (R1) mit den folgenden Schritten:
a. Bereitstellen einer Mehrzahl von gleichartigen Rollkörpern (R1);
b. Einfüllen der bereitgestellten Mehrzahl von Rollkörpern (R1) in einen Einfüllraum (11) unter Ausbildung einer dicht gepackten, einlagigen Schicht von Rollkörpern (R1), wobei im Falle von Rollkörpern (R1) mit vorgegebener Drehachse die Drehachsen aller eingefüllten Rollkörper parallel zueinander und senkrecht zur Schichtebene ausgerichtet sind;
c. Bringen eines Randes der einlagigen Schicht aus Rollkörpern (R1) in Kontakt mit einem Förderband (15), welches sich in seiner Breite senkrecht zur Schichtebene erstreckt und am Rand der Schicht entlang bewegbar ist;
d. Versetzen aller miteinander in Kontakt stehender Rollkörper (R1) der einlagigen Schicht in eine Drehbewegung, indem das Förderband (15) in einer Förderrichtung in Bewegung gesetzt wird; und
e. Herausbefördern der einzelnen Rollkörper (R1) auf dem Förderband (15) durch eine oberhalb des Förderbandes (15) angeordnete, nur für einzelne Rollkörper durchgängige Auslassöffnung (14) im Einfüllraum (11).

## Beschreibung

### TECHNISCHES GEBIET

Die vorliegende Erfindung bezieht sich auf das Gebiet der Fördertechnik. Sie betrifft ein Verfahren zum Vereinzeln von Rollkörpern. Sie betrifft weiterhin eine Rollkörpervereinzelungsvorrichtung zur Durchführung des Verfahrens.

### STAND DER TECHNIK

In der Fördertechnik besteht häufig der Wunsch aus einem ungeordneten Vorrat von gleichartigen Körper oder Gegenständen eine geordnete Reihe von einzeln hintereinander angeordneten Körpern oder Gegenständen zu erzeugen oder die Körper oder Gegenstände so zu vereinzeln, dass sie in der vereinzelten Form weiterverarbeitet werden können.

Die Druckschrift DE 35 00 660 A1 beschreibt eine Vorrichtung zur Zusammenführung von in einem breiten Flaschenstrom auf einem oder mehreren mehrspurigen, endlos umlaufenden Förderbändern oder dgl. langsam ankommenden Flaschen oder dgl. entlang eines einseitig angebrachten Führungsgeländers zu einer schnell ablaufenden drucklosen, geschlossenen Flaschenreihe. Das mehrspurige Förderband weist an seinem einen Endbereich eine Abbiegung um etwa 90° auf, wobei das Führungsgeländer im Bereich der Abbiegung angeordnet ist. Neben dem mehrspurigen Förderband ist im Bereich der Abbiegung eine erste Scheibe drehbar gelagert; der ersten Scheibe ist eine zweite, ebenfalls drehbar gelagerte Scheibe zugeordnet und die zweite Scheibe ist mindestens über die Hälfte ihres Umfanges von einem einspurigen Förderband umschlungen.

Die Druckschrift DE 37 1 5 577 A1 offenbart ein Verfahren zum Vereinzeln von in Reihen nebeneinander ankommenden, aufrecht stehenden Flaschen auf einer einen Hangabtrieb der Flaschen bewirkenden schiefen Ebene eines Zwischenförderers mit mehreren quer zum Hangabtrieb antreibbaren Förderabschnitten, bei welchem Verfahren die einzelnen Förderabschnitte stufenweise, zur Richtung des Hangabtriebs hin, mit höherer Geschwindigkeit angetrieben werden. Zumindest zwei benachbarte Förderabschnitte des Zwischenförderers werden mit in ihrer Richtung einander entgegengesetzten Geschwindigkeiten angetrieben.

Die Druckschrift US 4,974,720 offenbart eine drucklose Vorrichtung zur Ausrichtung verschiedener Objekte, insbesondere Flaschen, die einen Einlaufförderer mit mehreren Spuren aufweist, einen Zwischenförderer, der aus einer Mehrzahl von gegenüberliegenden Paddel-Ketten besteht, eine gebogene Führungsplatte über den Paddel-Ketten und einen einspurigen Auslassförderer. Um die Flaschen an der Bildung einer Doppelreihe am Eingang des Auslassförderers zu hindern, und um die Gesamtabmessungen des drucklosen Ausrichters zu reduzieren, führt der Zwischenförderer zu einem Übergangsförderer, der einen Mechanismus zur Ausrichtung der Flaschen einschliesst, welche sich anschicken, eine zweite Reihe im einspurigen Auslassförderer zu bilden.

Die Druckschrift US 5,551,551 beschreibt einen Förderer zur Kombination von Gegenständen aus einer Masse zu einer einzelnen Reihe, der eine erste Förderoberfläche umfasst, die mit einer ersten Geschwindigkeit rotiert, eine zweite Förderoberfläche, die mit einer zweiten Geschwindigkeit rotiert, welche grösser ist als die erste, wobei die zweite Förderoberfläche neben der ersten Förderoberfläche angeordnet ist, eine erste Führung, die die erste und zweite Förderoberfläche unter einem ersten Winkel quert, um Gegenstände von der ersten zur zweiten Förderoberfläche abzulenken, eine zweite Führung, die eine dritte Förderoberfläche unter einem zweiten Winkel quert, und einen Motor, der die erste Führung mit einer ersten Führungsgeschwindigkeit bewegt, die so gewählt ist, dass die Drehung der Gegenstände entlang der ersten Führung mit dem ersten Winkel minimiert ist.

Die Druckschrift US 6,328,151 beschreibt ein Verfahren und eine Vorrichtung zur Zusammenstellung wahllos orientierter Behälter auf einem Förderer in einer einzelnen Reihe. Die Vorrichtung umfasst einen drucklosen Kombinierungsförderer mit wenigstens zwei oder mehr Förderabschnitten, die zueinander benachbart sind, und zur Achse einer Führungsschiene abgewinkelt sind. Die im Wesentlichen Gerade Führungsschiene erstreckt sich in einem Winkel über den Kombinierungsförderer. Die Führungsschiene ist so ausgelegt, dass der untere Teil eines Behälters, der in Richtung der Führungsschiene zu fallen beginnt, die Führungsschiene zuerst berührt, dann zur Führungsschiene hin kippt und dabei die Führungsschiene in einer Höhe nahe dem Schwerpunkt des Behälters berührt, und dann in eine stabile Position zurückkehrt. Der Schwerpunkt des Behälters bleibt stets in seinem Stabilitätsbereich. Die Vorrichtung umfasst einen Einlaufförderer, um eine Mehrzahl von Behältern ohne spezifische Orientierung zuzuführen, und einen Eingangsführungsschienenabschnitt, der die Behälter zu einer Seite des Einlaufförderers bewegt. Ein Auslassförderer ist benachbart zum Kombinierungsförderer ausgerichtet, um die Einzelreihe der Behälter auszugeben, und ein Auswerfer kann an dem Auslassförderabschnitt angeordnet sein, um heruntergefallene Behälter zum Auslassförderer auszuwerfen.

Die Druckschrift US 7,086,520 offenbart eine Vorrichtung zum Transport und zur Anordnung von zylindrischen Elementen in einer Reihe, welche ein erstes Förderband umfasst, das durch erste Motormittel angetrieben ist, um eine Mehrzahl von zylindrischen Elementen in einer Einlaufrichtung zu ziehen. Ein zweites Förderband ist in Kaskade mit dem ersten Förderband angeordnet und fortlaufend angetrieben, um die Mehrzahl der zylindrischen Elemente aufzunehmen und in eine Richtung in Übereinstimmung mit der Einlaufrichtung zu befördern. Kanalisierungsmittel sind an einem oberen Lauf des zweiten Förderbandes befestigt, um die zylindrischen Elemente aufzugreifen und zu führen, die auf dem zweiten Förderband befördert werden, und zwar in einer Auslassrichtung zu einem Auslasskanal hinauf, der dort an einer Seite angeordnet ist. Sensoren sind mit den ersten Motormitteln verbunden und detektieren die Anwesenheit von wenigstens einem zylindrischen Element in einem ausgewählten Abschnitt des zweiten Förderbandes. Die Sensoren deaktivieren die ersten Motormittel nach einem ersten Zeitintervall nach der Detektion, und aktivieren sie nach einem zweiten Zeitintervall, wenn keine zylindrischen Elemente in dem ausgewählten Abschnitt detektiert werden.

Die oben beschriebenen Verfahren und Vorrichtungen haben alle die Besonderheit, dass sie Teil eines fortlaufenden Prozesses sind, in dem die zu vereinzelnden Gegenstände in einem breiten Strom herangefördert werden, um dann in einer Reihe hintereinander angeordneter einzelner Gegenstände umgruppiert zu werden. Derartige Lösungen sind daher für Anwendungen, bei denen eine bestimmte Anzahl von Gegenständen nach Art eines Batch-Betriebs vereinzelt werden sollen, entweder überdimensioniert oder schlicht nicht einsetzbar.

### DARSTELLUNG DER ERFINDUNG

Es ist daher eine Aufgabe der Erfindung, ein Verfahren und eine Vorrichtung zum Vereinzeln von Rollkörpern anzugeben, die es erlauben, auf einfache Weise und mit geringem apparativen Aufwand unterschiedlichste Rollkörper flexibel und funktionssicher zu vereinzeln.

Diese und andere Aufgaben werden durch die Merkmale der Ansprüche 1 und 9 gelöst.

Das erfindungsgemäss Verfahren zum Vereinzeln von Rollkörpern, welche entweder Kugelgestalt aufweisen oder in einer Ebene um eine vorgegebene Drehachse frei rollend bewegbar sind, ist gekennzeichnet durch folgende Schritte:
a) Bereitstellen einer Mehrzahl von gleichartigen Rollkörpern;
b) Einfüllen der bereitgestellten Mehrzahl von Rollkörpern) in einen Einfüllraum unter Ausbildung einer dicht gepackten, einlagigen Schicht von Rollkörpern, wobei im Falle von Rollkörpern mit vorgegebener Drehachse die Drehachsen aller eingefüllten Rollkörper parallel zueinander und senkrecht zur Schichtebene ausgerichtet sind;
c) Bringen eines Randes der einlagigen Schicht aus Rollkörpern in Kontakt mit einem Förderband, welches sich in seiner Breite senkrecht zur Schichtebene erstreckt und am Rand der Schicht entlang bewegbar ist;
d) Versetzen aller miteinander in Kontakt stehender Rollkörper der einlagigen Schicht in eine Drehbewegung, indem das Förderband in einer Förderrichtung in Bewegung gesetzt wird; und
e) Herausbefördern der einzelnen Rollkörper auf dem Förderband durch eine oberhalb des Förderbandes angeordnete, nur für einzelne Rollkörper durchgängige Auslassöffnung im Einfüllraum.

Eine Ausgestaltung des erfindungsgemässen Verfahrens ist dadurch gekennzeichnet, dass der Rand der einlagigen Schicht aus Rollkörpern mittels Schwerkraft in Kontakt mit einem Förderband gebracht wird.

Insbesondere wird die einlagige Schicht aus Rollkörpern derart schräg positioniert, dass sich der mit dem Förderband in Kontakt stehende Rand der Schicht unten befindet. Speziell wird zur schrägen Positionierung der Einfüllraum zwischen zwei Positionen verschwenkt.

Eine andere Ausgestaltung des erfindungsgemässen Verfahren ist dadurch gekennzeichnet, dass die aus der Auslassöffnung kommenden Rollkörper mittels eines zu öffnenden Sperrelements zu einer lückenlosen Reihe aufgestaut werden, und dass zum Ausgeben einer bestimmten Anzahl von aufgestauten Rollkörpern das Sperrelement geöffnet wird.

Eine weitere Ausgestaltung des erfindungsgemässen Verfahrens ist dadurch gekennzeichnet, dass die Rollkörper Kugelgestalt aufweisen und mit einer Ware gefüllt sind.

Eine andere Ausgestaltung des erfindungsgemässen Verfahrens ist dadurch gekennzeichnet, dass die Rollkörper als Flaschen ausgebildet sind.

Eine noch andere Ausgestaltung des erfindungsgemässen Verfahrens ist dadurch gekennzeichnet, dass die Rollkörper zylinderförmig ausgebildet und mit einer Ware gefüllt sind.

Die erfindungsgemässe Rollkörpervereinzelungsvorrichtung zur Durchführung des Verfahrens nach der Erfindung umfasst einen geneigten oder vertikal orientierten, durch erste und zweite Seitenwände begrenzten, nach oben und unten offenen Einfüllraum zur Aufnahme einer Mehrzahl von gleichartigen Rollkörpern, welcher Einfüllraum unten an ein quer von der ersten zur zweiten Seitenwand laufendes Förderband angrenzt, wobei in der zweiten Seitenwand oberhalb des Förderbandes eine den zu vereinzelnden Rollkörpern angepasste Auslassöffnung angeordnet ist, durch welche hindurch das Förderband einzelne der Rollkörper aus dem Einfüllraum herausbefördern kann.

Eine Ausgestaltung der Rollkörpervereinzelungsvorrichtung nach der Erfindung ist dadurch gekennzeichnet, dass der Einfüllraum nach hinten durch eine geneigte Auflagefläche begrenzt ist, an welcher die im Einfüllraum befindlichen Rollkörper anliegen.

Insbesondere ist der Einfüllraum mit seiner Auflagefläche auf einem Gestell montiert, welches ein Verschwenken des Einfüllraums um eine horizontale Schwenkachse zwischen zwei unterschiedlich stark geneigten Positionen erlaubt.

Speziell ist zum Verschwenken des Einfüllraums ein angetriebenes Verstellelement, insbesondere in Form eines hydraulischen oder pneumatischen Zylinders, vorgesehen.

Eine andere Ausgestaltung der Rollkörpervereinzelungsvorrichtung nach der Erfindung ist dadurch gekennzeichnet, dass das Förderband als endlos umlaufenden Band ausgebildet ist, welches an einem Ende über eine Antriebsrolle und am anderen Ende über eine Umlenkrolle geführt ist.

Eine weitere Ausgestaltung der Rollkörpervereinzelungsvorrichtung nach der Erfindung ist dadurch gekennzeichnet, dass hinter der Auslassöffnung ein Sperrelement, welches geöffnet werden kann, derart angeordnet ist, dass es die mit der Förderband durch die Auslassöffnung beförderten Rollkörper in einer Sperrstellung zu einer Reihe aufstaut und nach dem Öffnen einzeln durchlässt.

Insbesondere ist hinter dem Sperrelement ein sich nach unten erstreckender Ausgabeschacht angeordnet, durch welchen die vom Sperrelement frei gegebenen Rollkörper einzeln nach unten weggeführt werden.

Eine noch andere Ausgestaltung der Rollkörpervereinzelungsvorrichtung nach der Erfindung ist dadurch gekennzeichnet, dass auf der dem Einfüllraum gegenüberliegenden Seite des Förderbandes eine Unterstützungsplatte angeordnet ist, welche das Förderband gegen den Druck der aufliegenden Rollkörper stützt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: ein stark vereinfachtes Schema einer senkrecht stehenden Rollkörpervereinzelungsvorrichtung zum Vereinzeln von Flaschen gemäss einem Ausführungsbeispiel der Erfindung;
- Fig. 2a: in einer Seitenansicht eine zu Fig. 2 vergleichbare Vorrichtung zur Vereinzelung von Flaschen mit Schwenkmechanismus gemäss einem anderen Ausführungsbeispiel der Erfindung in einer heruntergeschwenkten Einfüllstellung;
- Fig. 2b: die Vorrichtung gemäss Fig. 2a in einer hochgeschwenkten Arbeitsstellung;
- Fig. 3: die Vorrichtung nach Fig. 1 im Einsatz zur Vereinzelung von kugelförmigen Rollkörpern/Behältern;
- Fig. 4a-e: verschiedene Formen von Rollkörpern, wie sie mit einer Vorrichtung nach der Erfindung vereinzelbar sind;
- Fig. 5: ein weiteres Beispiel für einen mit der Erfindung vereinzelbaren Rollkörper in Form einer schlanken Flasche in der Seitenansicht (a) und in der Ansicht von oben (b);
- Fig. 6: ein anderes Beispiel für einen mit der Erfindung vereinzelbaren Rollkörper in Form eines Fasses;
- Fig. 7: einen für die Vereinzelung nach der Erfindung geeigneten kugelförmigen, aus zwei Halbkugeln zusammensetzbaren Rollkörper, der als Verpackung einen Inhalt aufnehmen kann; und
- Fig. 8: einen für die Vereinzelung nach der Erfindung geeigneten zylinderscheibenförmigen Rollkörper, der als Verpackung einen Inhalt aufnehmen kann, in der Seitenansicht (a) und in der Frontansicht (b).

### WEGE ZUR AUSFÜHRUNG DER ERFINDUNG

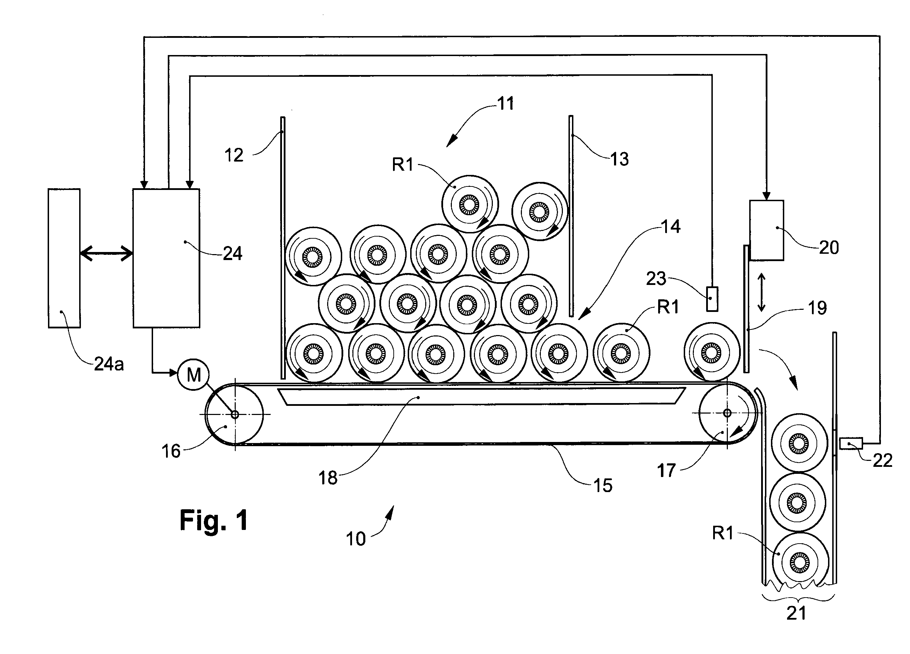

Fig. 1 zeigt ein stark vereinfachtes Schema einer senkrecht stehenden Rollkörpervereinzelungsvorrichtung zum Vereinzeln von Flaschen gemäss einem Ausführungsbeispiel der Erfindung. Die dargestellte Rollkörpervereinzelungsvorrichtung 10 umfasst einen durch Seitenwände 12 und 13 seitlich begrenzten Einfüllraum 11, der als Speicher eine bestimmte Anzahl von zu vereinzelnden Rollkörpern R1 aufnehmen kann, die im Beispiel als (liegende) Flaschen mit einem Schraubverschluss ausgebildet sind.

Der Einfüllraum 11 ist nach oben offen und kann von dort mit neuen Rollkörpern R1 bzw. Flaschen gefüllt werden. Nach unten ist der Einfüllraum 11 durch eine endlos umlaufendes Förderband 15 begrenzt, das auf der einen (linken) Seite um eine durch einen Motor M angetriebene Antriebsrolle 16 geführt ist, und auf der anderen (rechten) Seite um eine Umlenkrolle 17 herum läuft. Die Seitenwand 13 ist kürzer ausgeführt als die Seitenwand 12 und endet ein Stück oberhalb des Förderbandes 15, so dass an dieser Stelle eine Auslassöffnung 14 gebildet ist, die ausreichend gross ist, um einen einzelnen Rollkörper R1 durchzulassen, aber klein genug, um den gleichzeitigen Durchtritt von zwei oder mehr Rollkörpern R1 sicher zu verhindern.

Direkt unterhalb des den Einfüllraum 11 abschliessenden Förderbandes 15 ist eine Unterstützungsplatte 18 angeordnet, die sich soweit unter dem Förderband 15 erstreckt, wie das Förderband 15 im Betrieb die einzelnen Rollkörper R1 transportierend trägt. Die Unterstützungsplatte 18 verhindert ein Durchhängen des Förderbandes 15 unter der Belastung der aufliegenden Rollkörper R1 und trägt so zu einem sicheren Betrieb der Anlage bei.

Das Förderband 15 wird durch einen (nicht gezeigten) motorischen Antrieb unter dem Einfüllraum 11 von links nach rechts auf die Auslassöffnung 14 zu bewegt. Die in den Einfüllraum 11 eingefüllten Rollkörper R1 bilden eine vertikale Ein-Körper-Schicht aus dicht gepackten, mit ihren Längsachsen parallel ausgerichteten Rollkörpern R1, die untereinander in Reibungskontakt stehen und sich alle um ihre Längsachse drehen (siehe die Drehpfeile in Fig. 1), wenn die untere, auf dem Förderband 15 liegende Reihe von Rollkörpern R1 durch das laufende Förderband 15 in eine gleichgerichtete Drehung versetzt werden.

Durch die gezielte Drehung aller in der einlagigen Schicht im Einfüllraum 11 befindlichen Rollkörper R1 und das Nachdrücken der oberhalb der untersten Reihe liegenden Rollkörper R1 wird die unterste Reihe durch das Förderband 15 rollend zur Auslassöffnung 14 bewegt (gerollt und tritt dort einzeln aus dem Einfüllraum 11 aus. Von oben rücken dabei die höher liegenden Rollkörper nach und Schliessen die Lücken in der auf dem Förderband 15 befindliche Reihe der Rollkörper wieder, bis alle Rollkörper R1 aus dem Einfüllraum 11 vereinzelt ausgegeben sind. Das Nachrücken der Rollkörper R1 wird allein durch die Schwerkraft bewirkt.

Die Reihe der vereinzelt durch die Auslassöffnung ausgegebenen Rollkörper kann durch einen vertikal heraufziehbaren Schieber 19 gestoppt werden. Hinter dem Schieber 19 ist ein vertikaler Ausgabeschacht 21 angeordnet, durch den die vereinzelten Rollkörper R1 zur weiteren Verwendung nach unten ausgegeben werden. Ist der Ausgabeschacht 21 leer oder beginnt, sich zu leeren, kann der Schieber 19 mittels eines steuerbaren Antriebes 20 hochgefahren bzw. geöffnet werden und eine gewünschte Anzahl von vereinzelten Rollkörpern R1 zum Ausgabeschacht 21 durchlassen.

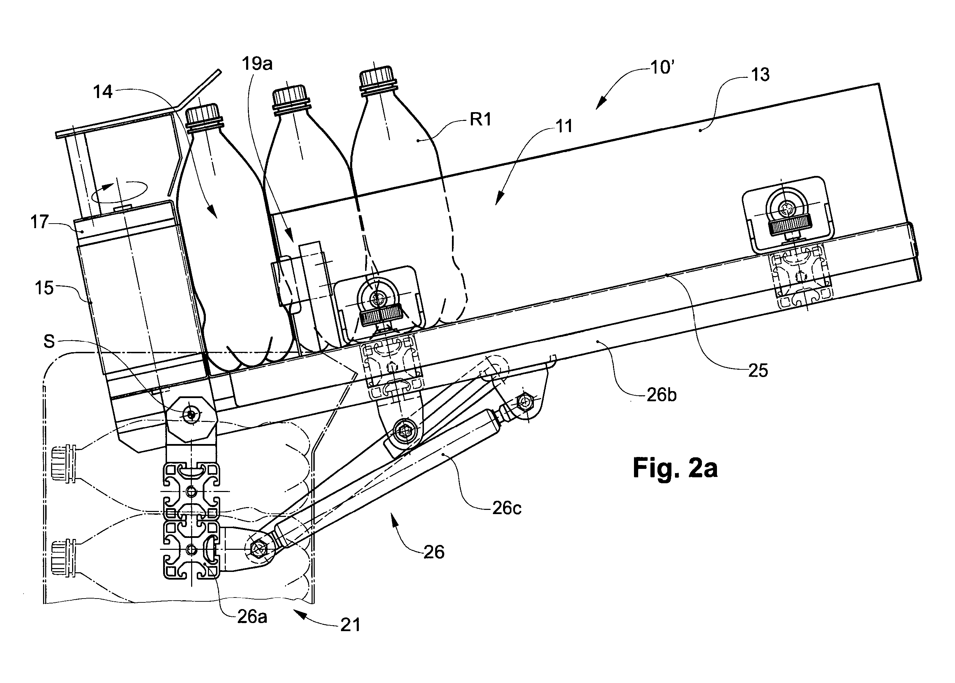

Die gleichmässige Lage der Rollkörper R1 in der Schicht im Einfüllraum 11 kann durch entsprechend angeordnete Vorder- und Rückwände sichergestellt werden. Einfacher ist es jedoch, die Vorderwand wegzulassen und gemäss Fig. 2a eine schräg gestellte Auflagefläche 25 auf der Rückseite eines geneigten Einfüllraumes 11 vorzusehen, an der alle Rollkörper R1 aufgrund einer Schwerkraftkomponente anliegen und ausgerichtet werden und beim Nachrücken herabrutschen.

Der ganze Vereinzelungsvorgang kann gemäss Fig. 1 durch eine Steuerung 24 automatisiert werden. Die Steuerung 24 steuert über den Motor M den Antrieb der Antriebsrolle 16 und damit das Vorrücken bzw. die Vorwärtsbewegung des Förderbandes 15. Die Steuerung 24 steuert weiterhin über den Antrieb 20 die Bewegung des Schiebers 19 und damit das Durchlassen der vereinzelten Rollkörper R1 zum Ausgabeschacht 21. Sie kann mit einer Ein- und Ausgabeeinheit 24a in Verbindung stehen, in der Betriebsparameter auf einem Display angezeigt und über eine Tastatur oder dgl. eingegeben werden können. Zur Überwachung des Betriebs und zur autonomen Eingabe von Betriebsdaten in die Steuerung 24 können an verschiedenen Stellen der Anlage Sensoren angeordnet sein. Im Beispiel der Fig. 1 überwacht ein erster Sensor 22 den Füllstand des Ausgabeschachtes 21, während ein zweiter Sensor 23 das Vorhandensein von Rollkörpern R1 am Schieber 19 detektiert. Weitere Sensoren können an anderen Stellen der Anlage vorgesehen werden, um z.B. den Füllstand des Einfüllraumes 11 oder den Betrieb des Förderbandes 15 zu überwachen.

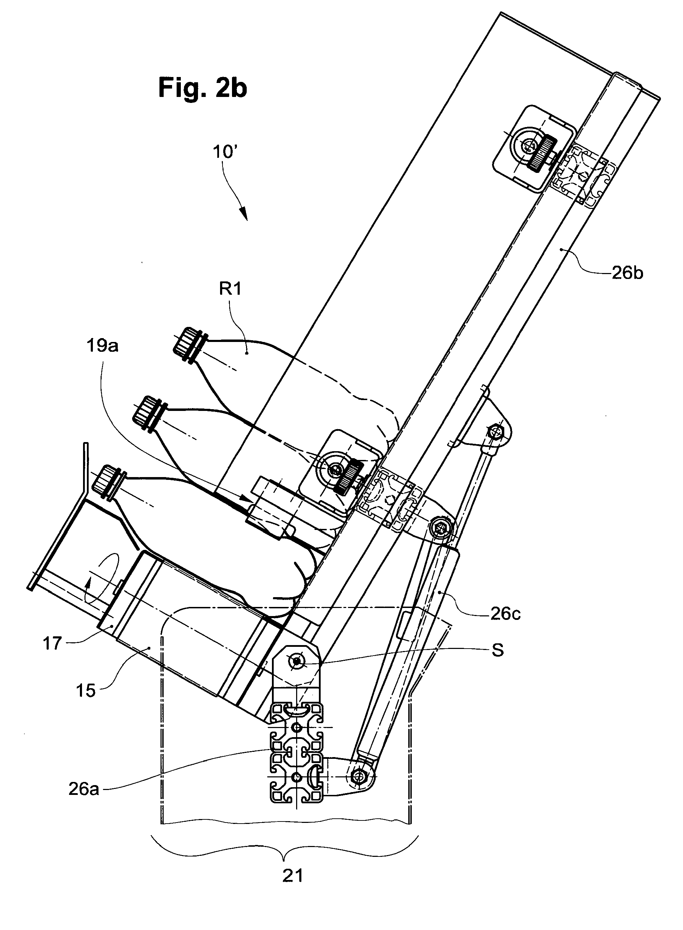

Fig. 2 zeigt als Variante eine Rollkörpervereinzelungsvorrichtung 10', die einen schräg stehenden Einfüllraum 11 mit einer ebenfalls schräg stehenden Auflagefläche 25 aufweist, der um eine horizontale Schwenkachse S von der in Fig. 2a gezeigten flachen Einfüllposition in eine in Fig. 2b gezeigte steile Ausgabeposition verschwenkt werden kann. Der Einfüllraum 11 mit der Auflagefläche 25 ist dazu auf einem aus Metall-Profilen aufgebauten Gestell 26 angeordnet, das einen ortsfesten Basisträger 26a und einen verschwenkbar am Basisträger 26a angelenkten Schwenkboden 26b umfasst. Der Schwenkvorgang wird durch ein Verstellelement 26c bewirkt, das beispielsweise als Hydraulikzylinder ausgebildet sein kann. In der Füllstellung (Fig. 2a) kann der Einfüllraum 11 auf einfache Weise (z.B. manuell) mit Rollkörpern/Flaschen R1 gefüllt werden. Nach dem Hochschwenken in die Ausgabestellung (Fig. 2b) ist die Vorrichtung zur Vereinzelung bereit. Die Rollkörper R1 rutschen dann leicht nach, wenn die unten liegenden nach und nach durch die Auslassöffnung 14 den Einfüllraum 11 vereinzelt verlassen.

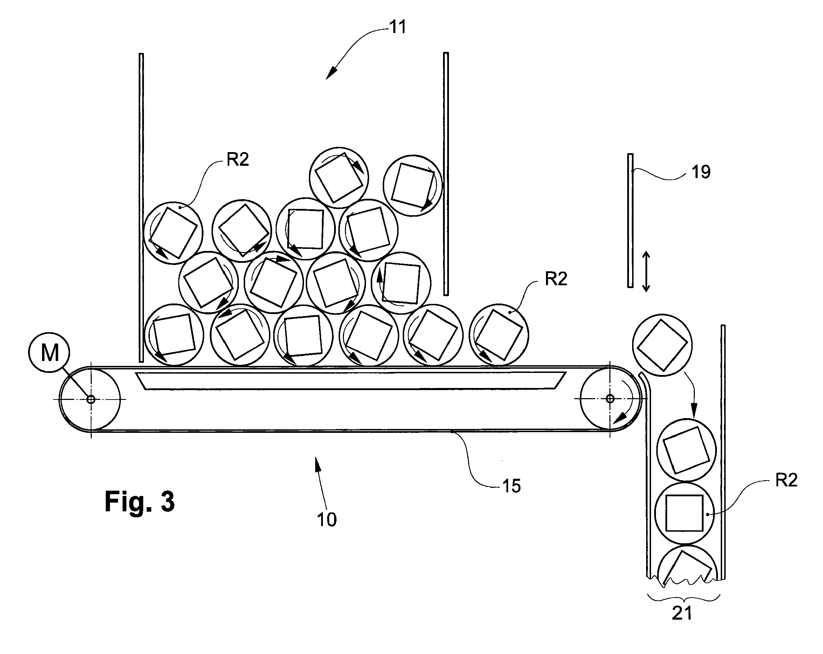

Die in Fig. 1 gezeigte prinzipielle Vorrichtung ist nicht nur geeignet, Rollkörper R1 in Flaschenform zu vereinzeln, sondern kann auch genauso gut eingesetzt werden, um gemäss Fig. 3 kugelförmige Rollkörper R2 vereinzelt auszugeben, die als lagerfähige, ein- und ausspeicherbare Verpackungen für Gegenstände dienen.

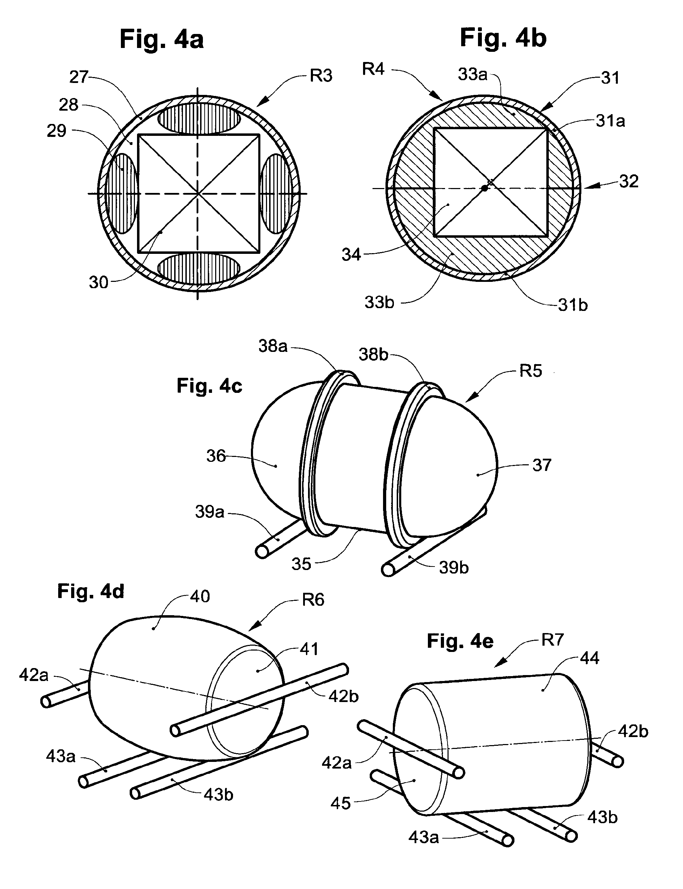

Fig. 4 zeigt verschiedene Varianten derartiger Rollkörper-Verpackungen.

In Fig. 4a ist in einer teilweise geschnittenen Darstellung ein Rollkörper R3 in Form einer Verpackungseinheit dargestellt. Der Rollkörper R3 umfasst einen (im Beispiel würfel- oder quaderförmigen) Packungsinhalt 30, der mit Abstand von einer geschlossenen Hülle 27 umgeben ist. Der Packungsinhalt 30 ist in diesem Beispiel als Paket dargestellt, in welchem die eigentliche Ware verpackt ist. Die Hülle 27 hat eine Wand mit einer gleichmässigen Wanddicke. Im Beispiel der Fig. 4a ist der Packungsinhalt 30 mit seinen Diagonalen kleiner als der Innendurchmesser der Hülle 27, so dass ohne zusätzliche Fixierungsmittel der Packungsinhalt 30 in der Hülle 27 beweglich wäre und beim Rollen des Rollkörpers R3 zu Beschädigungen am Packungsinhalt 30 oder an der Hülle 27 führen würde. Zudem würde der Rollkörper R3 beim Rollen nicht vorhersagbare Bewegungen ausführen, die beim Transport unerwünscht sind. Der Packungsinhalt 30 ist daher im Hohlraum 28 der Hülle 27 mittels mehrerer Fixiermittel 29 fixiert. Die Fixiermittel 29 können unterschiedliche Formen aufweisen und an unterschiedlichen Positionen zwischen Packungsinhalt 30 und Hülle 27 angeordnet sein. Im gezeigten Beispiel der Fig. 4a haben die Fixiermittel 29 eine Kissenform und sind jeweils zwischen einer Seitenfläche des Packungsinhalts 30 und der Hülle 27 positioniert. Die Fixiermittel 29 sind vorzugsweise elastisch verformbar, so dass sie mit einer gewissen Kraft gegen den Packungsinhalt 30 drücken, aber auch während des Transports Stösse abfangen und vom Packungsinhalt 30 fernhalten können.

Im Allgemeinen sollte sich der Schwerpunkt des Packungsinhalts 30 in Übereinstimmung mit dem Mittelpunkt der (kugelförmigen) Hülle 27 befinden. Verlagert sich gemäss Fig. 4b der Schwerpunkt (schwarzer Punkt) aus dem Mittelpunkt des Packungsinhalts 34 heraus, kann beim Rollkörper R4 der Schwerpunkt dadurch in den Mittelpunkt der Hülle 31 gebracht werden, dass der Packungsinhalt 34 insgesamt innerhalb der Hülle 31 um ein entsprechendes Stück verschoben angeordnet wird. In Fig. 4b ist der Packungsinhalt 34 dabei durch angepasste Füllkörper 33a und 33b in der Hülle 31 gehalten, die ihrerseits aus zwei in einer Trennebene 32 trennbaren Halbschalen 31 a und 31 b zusammengesetzt ist.

Neben Kugeln oder flachen können aber auch andere Rollkörperformen im Rahmen der Erfindung eingesetzt werden. Fig. 4c-e zeigen entsprechende Beispiele: Rollkörper R6 der Fig. 4d hat die äussere Form einer Tonne mit einer bauchigen Hülle 40 und geraden Seitenwänden 41. Beim Rollen des einzelnen Rollkörpers R6 kommen zur Führung Seitenführungen 42a,b und Laufschienen 43a,b zum Einsatz.

Der Rollkörper R7 der Fig. 4e ist zylindrisch mit einer zylindrischen Hülle 44 und geraden Seitenwänden 45. Auch hier kommen zur Führung Seitenführungen 42a,b und Laufschienen 43a,b zum Einsatz.

Der Rollkörper R5 der Fig. 4c hat einen mittleren Zylinderabschnitt 35 und Halbschalen 36 und 37 als Endteile. Er hat zwei voneinander beabstandete, umlaufende Rollreifen 38a und 38b und rollt auf Führungselementen 39a und 39b.

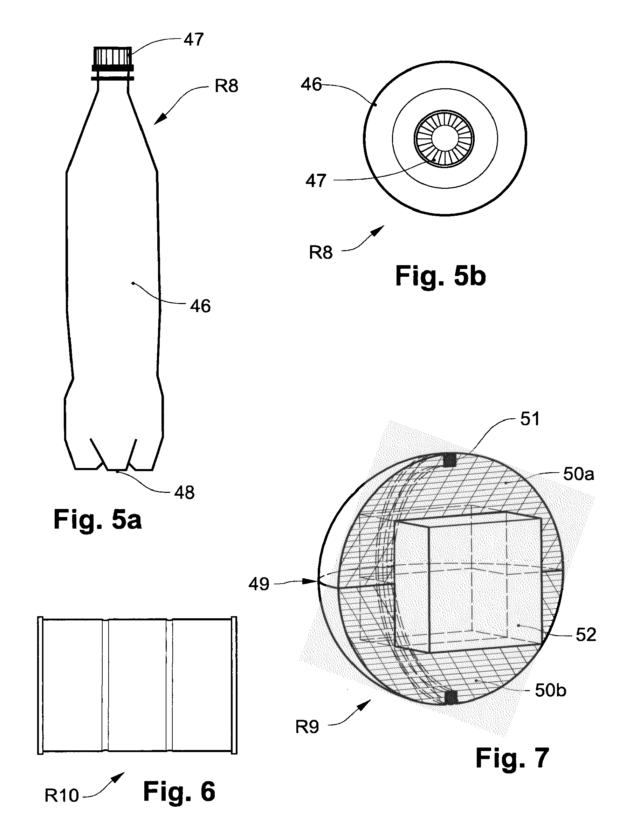

Weitere mögliche Rollkörper sind die in Fig. 5 dargestellte schlanke Flasche 46 aus PET oder dgl. mit einem Schraubverschluss 47 und einem ausgeformten Boden 48 (Rollkörper R8), das Fass bzw. die Büchse aus Fig. 6 (Rollkörper R10) und der kugelförmige Rollkörper R9 aus Fig. 7, der aus zwei Halbkugeln 50a und 50b zusammengesetzt ist, die in einer Trennebene 49 trennbar sind und im Inneren einen kubischen Innenraum 52 zur Aufnahme eines Packungsinhalts aufweisen. Die Halbkugeln 50a,b werden im zusammengesetzten Zustand durch ein in einer Nut umlaufendes Verschlusselement 51 zusammengehalten.

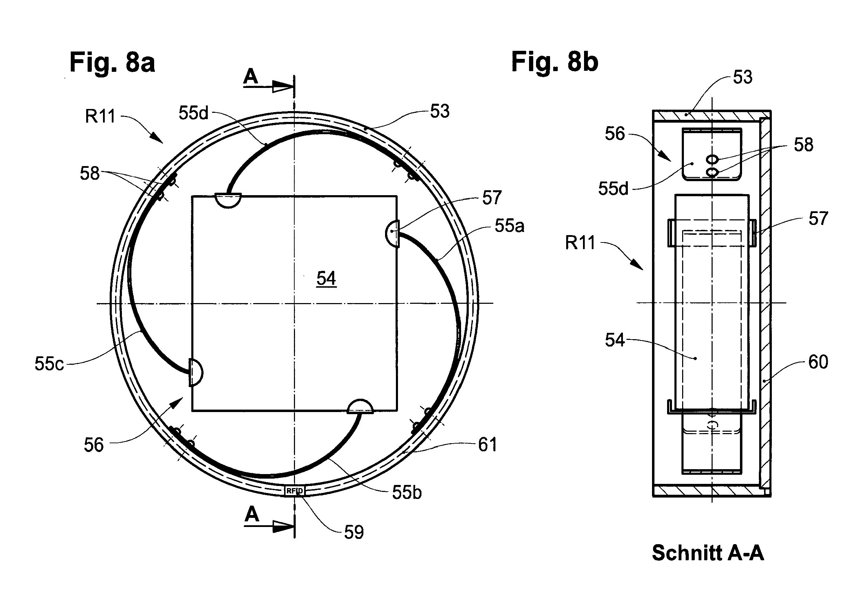

Fig. 8 zeigt einen weiteren Rollkörper R11 in Form eines flachen Zylinders, der eine aussen um einen Innenraum 56 umlaufende Zylinderwand 53 umfasst, innerhalb derer ein Packungsinhalt 54 mittels spiralig verlaufender Haltefedern 55a-d gehalten wird, die an ihren freien Enden mit entsprechenden Halterungen 57 ausgestattet sind und durch Befestigungsmittel 58 (z.B. Nieten) an der Zylinderwand 53 befestigt sind. Der Rollkörper R11 kann dabei einseitig oder beidseitig mit einem Deckel 60 verschlossen sein. Er kann auch - wie die anderen zuvor beschriebenen Rollkörper - einen Informationsträger 59, z.B. in Form eines über eine integrierte Antenne 61 kommunizierenden RFIDs oder eines anderen Identifikationsmittels, aufweisen, auf dem Informationen über den Verpackungsinhalt oder dgl. abgelegt (eingespeichert) sind.

## Patentansprüche

1. Verfahren zum Vereinzeln von Rollkörpern (R1-R11), welche entweder Kugelgestalt aufweisen (R2-R4, R9) oder in einer Ebene um eine vorgegebene Drehachse frei rollend bewegbar sind (R1, R5-R8, R10, R11), **gekennzeichnet durch** folgende Schritte:
a. Bereitstellen einer Mehrzahl von gleichartigen Rollkörpern (R1-R11);
b. Einfüllen der bereitgestellten Mehrzahl von Rollkörpern (R1-R11) in einen Einfüllraum (11) unter Ausbildung einer dicht gepackten, einlagigen Schicht von Rollkörpern (R1-R11), wobei im Falle von Rollkörpern (R1, R5-R8, R10, R11) mit vorgegebener Drehachse die Drehachsen aller eingefüllten Rollkörper parallel zueinander und senkrecht zur Schichtebene ausgerichtet sind;
c. Bringen eines Randes der einlagigen Schicht aus Rollkörpern (R1-R11) in Kontakt mit einem Förderband (15), welches sich in seiner Breite senkrecht zur Schichtebene erstreckt und am Rand der Schicht entlang bewegbar ist;
d. Versetzen aller miteinander in Kontakt stehender Rollkörper (R1-R11) der einlagigen Schicht in eine Drehbewegung, indem das Förderband (15) in einer Förderrichtung in Bewegung gesetzt wird; und
e. Herausbefördern der einzelnen Rollkörper (R1-R11) auf dem Förderband (15) **durch** eine oberhalb des Förderbandes (15) angeordnete, nur für einzelne Rollkörper durchgängige Auslassöffnung (14) im Einfüllraum (11).

2. Verfahren nach Anspruch 1, **dadurch gekennzeichnet, dass** der Rand der einlagigen Schicht aus Rollkörpern (R1-R11) mittels Schwerkraft in Kontakt mit einem Förderband (15) gebracht wird.

3. Verfahren nach Anspruch 2, **dadurch gekennzeichnet, dass** die einlagige Schicht aus Rollkörpern (R1-R11) derart schräg positioniert wird, dass sich der mit dem Förderband (15) in Kontakt stehende Rand der Schicht unten befindet.

4. Verfahren nach Anspruch 3, **dadurch gekennzeichnet, dass** zur schrägen Positionierung der Einfüllraum zwischen zwei Positionen verschwenkt wird.

5. Verfahren nach Anspruch 1, **dadurch gekennzeichnet, dass** die aus der Auslassöffnung kommenden Rollkörper (R1-R11) mittels eines zu öffnenden Sperrelements (19; 19a) zu einer lückenlosen Reihe aufgestaut werden, und dass zum Ausgeben einer bestimmten Anzahl von aufgestauten Rollkörpern (R1-R11) das Sperrelement geöffnet wird.

6. Verfahren nach Anspruch 1, **dadurch gekennzeichnet, dass** die Rollkörper (R2-R4, R9) Kugelgestalt aufweisen und mit einer Ware gefüllt sind.

7. Verfahren nach Anspruch 1, **dadurch gekennzeichnet, dass** die Rollkörper (R1, R8) als Flaschen ausgebildet sind.

8. Verfahren nach Anspruch 1, **dadurch gekennzeichnet, dass** die Rollkörper (R5, R6, R7, R10, R11) zylinderförmig ausgebildet und mit einer Ware gefüllt sind.

9. Rollkörpervereinzelungsvorrichtung (10, 10') zur Durchführung des Verfahrens nach Anspruch 1, umfassend einen geneigten oder vertikal orientierten, durch erste und zweite Seitenwände (12 bzw. 13) begrenzten, nach oben und unten offenen Einfüllraum (11) zur Aufnahme einer Mehrzahl von gleichartigen Rollkörpern (R1-R11), welcher Einfüllraum (11) unten an ein quer von der ersten (12) zur zweiten (13) Seitenwand laufendes Förderband (15) angrenzt, wobei in der zweiten Seitenwand (13) oberhalb des Förderbandes (15) eine den zu vereinzelnden Rollkörpern angepasste Auslassöffnung (14) angeordnet ist, durch welche hindurch das Förderband (15) einzelne der Rollkörper (R1-R11) aus dem Einfüllraum (11) herausbefördern kann.

10. Rollkörpervereinzelungsvorrichtung nach Anspruch 9, **dadurch gekennzeichnet, dass** der Einfüllraum (11) nach hinten durch eine geneigte Auflagefläche (25) begrenzt ist, an welcher die im Einfüllraum (11) befindlichen Rollkörper (R1-R11) anliegen.

11. Rollkörpervereinzelungsvorrichtung nach Anspruch 10, **dadurch gekennzeichnet, dass** der Einfüllraum (11) mit seiner Auflagefläche (25) auf einem Gestell (26) montiert ist, welches ein Verschwenken des Einfüllraums (11) um eine horizontale Schwenkachse (S) zwischen zwei unterschiedlich stark geneigten Positionen erlaubt.

12. Rollkörpervereinzelungsvorrichtung nach Anspruch 11, **dadurch gekennzeichnet, dass** zum Verschwenken des Einfüllraums (11) ein angetriebenes Verstellelement (26c), insbesondere in Form eines hydraulischen oder pneumatischen Zylinders, vorgesehen ist.

13. Rollkörpervereinzelungsvorrichtung nach Anspruch 9, **dadurch gekennzeichnet, dass** das Förderband (15) als endlos umlaufenden Band ausgebildet ist, welches an einem Ende über eine Antriebsrolle (16) und am anderen Ende über eine Umlenkrolle (17) geführt ist.

14. Rollkörpervereinzelungsvorrichtung nach Anspruch 9, **dadurch gekennzeichnet, dass** hinter der Auslassöffnung (14) ein Sperrelement (19; 19a), welches geöffnet werden kann, derart angeordnet ist, dass es die mit der Förderband (15) durch die Auslassöffnung (14) beförderten Rollkörper (R1-R11) in einer Sperrstellung zu einer Reihe aufstaut und nach dem Öffnen einzeln durchlässt.

15. Rollkörpervereinzelungsvorrichtung nach Anspruch 14, **dadurch gekennzeichnet, dass** hinter dem Sperrelement (19; 19a) ein sich nach unten erstreckender Ausgabeschacht (21) angeordnet ist, durch welchen die vom Sperrelement (19; 19a) frei gegebenen Rollkörper (R1-R11) einzeln nach unten weggeführt werden.

16. Rollkörpervereinzelungsvorrichtung nach Anspruch 9, **dadurch gekennzeichnet, dass** auf der dem Einfüllraum (11) gegenüberliegenden Seite des Förderbandes (15) eine Unterstützungsplatte (18) angeordnet ist, welche das Förderband (15) gegen den Druck der aufliegenden Rollkörper (R1-R11) stützt.
